# FASCICULE DE BREVET EUROPEEN

(11) **EP 1 290 402 B1**
(45) Date de publication et mention de la délivrance du brevet: **12.07.2006**
(21) Numéro de dépôt: 02732851.7
(22) Date de dépôt: 07.05.2002
(51) Int. Cl.: F42D 1/05, F41A 19/65, F42B 3/113, H01M 8/06

(54) **MODULE D'APPROVISIONNEMENT EN HYDROGENE D'UNE MINI-PILE A COMBUSTIBLE AVEC COMMANDE SEQUENTIELLE D'ELEMENTS PYROTECHNIQUES**
VERFAHREN ZUR VERSORGUNG EINER MITTELS BRENNSTOFF BETRIEBENEN BATTERIE MIT WASSERSTOFF, WOBEI DIE PYROTECHNISCHE ELEMENTE SEQUENTIELL BETÄTIGT WERDEN
MODULE FOR SUPPLYING HYDROGEN TO A FUEL MINI-CELL WITH SEQUENTIAL CONTROL OF PYROTECHNIC ELEMENTS

(30) Priorité: 10.05.2001 FR 0106181
(43) Date de publication de la demande: 12.03.2003
(73) Titulaire: COMMISSARIAT A L'ENERGIE ATOMIQUE, 75752 Paris (FR)
(72) Inventeur: DELAPIERRE, Gilles, F-38180 Seyssins (FR)
(74) Mandataire: Hecké, Gérard
(86) Numéro de dépôt international: PCT/FR2002/001556
(87) Numéro de publication internationale: WO 2002/090871

(56) Documents cités:
- FR-A- 1 426 487
- FR-A- 2 660 749
- FR-A- 2 679 640
- GB-A- 2 164 637
- US-A- 4 135 455
- US-A- 4 489 655

## Description

### Domaine technique de l'invention

L'invention concerne un module d'approvisionnement en hydrogène d'une mini-pile à combustible avec commande séquentielle d'éléments pyrotechniques.

### État de la technique

L'alimentation d'un appareil portable par une mini-pile à combustible a été proposée par la Demanderesse dans la demande de brevet PCT/FR01/04092 (revendiquant la priorité de la demande de brevet français n°0016941). Ce document décrit un module, par exemple sous forme de carte au format d'une carte de crédit, dans lequel l'hydrogène est libéré progressivement, en fonction de la demande en énergie, par la combustion de corps en matériau solide pyrotechnique. Chaque corps solide, en matériau pyrotechnique, décomposable par combustion, est associé à un dispositif de mise à feu qui provoque la combustion du corps associé et la libération d'hydrogène.

Le document précité donne peu de détails sur la commande des dispositifs de mise à feu. Il précise néanmoins que la commande est réalisée électroniquement et utilise des moyens d'adressage des organes de mise à feu. Ceci implique qu'un circuit électronique, auquel est affectée une adresse, doit être associé à chaque élément pyrotechnique. Un tel système est à la fois complexe et coûteux.

On pourrait supprimer l'adressage prévu dans le document précité et commander séparément chaque dispositif de mise à feu à partir d'un circuit électronique centralisé connecté par des liaisons fil-à-fil à chaque dispositif de mise à feu. Une telle disposition présenterait l'inconvénient de nécessiter un grand nombre dé connexions électriques. De plus, ces connexions devraient passer à l'intérieur d'un réservoir étanche, ce qui complique la réalisation du dispositif et en augmente le coût.

### Objet de l'invention

L'invention a pour but un module d'approvisionnement en hydrogène d'une mini-pile à combustible avec une commande séquentielle d'éléments pyrotechniques ne présentant pas ces inconvénients, c'est-à-dire à la fois simple à réaliser, peu volumineux et peu coûteux.

Selon l'invention, ce but est atteint par un module selon les revendications annexées et, plus particulièrement, par un module qui comporte des moyens pour le déclenchement et le contrôle de la libération progressive d'hydrogène dans une mini-pile à combustible, l'hydrogène étant fourni, après leur mise à feu, par la combustion d'une pluralité d'éléments pyrotechniques intégrés dans le module, lesdits moyens comportant une source d'énergie et un dispositif de commande séquentielle de la mise à feu des éléments pyrotechniques comportant des moyens sélectifs de connexion de la source d'énergie à un élément de mise à feu de chacun des éléments pyrotechniques, les moyens de connexion comportant des moyens pour connecter à la source d'énergie, pendant une période de mise à feu prédéterminée, un seul élément de mise à feu associé à un élément pyrotechnique prédéterminé et pour préparer automatiquement, après la période de mise à feu, la connexion à la source d'énergie d'un élément de mise à feu d'un autre élément pyrotechnique.

Selon un mode de réalisation préférentiel, les moyens de connexion comportent des moyens sensibles à la température ou à la pression pour préparer la connexion à la source d'énergie d'un élément de mise à feu d'un autre élément pyrotechnique.

Selon un premier développement de l'invention, la source d'énergie étant une source d'énergie électrique, les moyens de connexion comportent une borne d'entrée, des moyens pour connecter la borne d'entrée à la source d'énergie pendant chaque période de mise à feu, la borne d'entrée étant, à un instant donné, connectée à un élément de mise à feu d'un seul élément pyrotechnique, la combustion dudit élément pyrotechnique actionnant, après ladite période de mise à feu, des moyens de connexion sensibles à la température ou à la pression provoquant automatiquement la connexion de la borne d'entrée à un élément de mise à feu d'un autre élément pyrotechnique.

Selon un mode de réalisation préférentiel, les éléments de mise à feu sont des filaments chauffants et, en position de mise à feu, le filament chauffant concerné est connecté aux bornes de la source d'énergie électrique, les moyens de connexion sensibles à la température ou à la pression constituant des interrupteurs, normalement ouverts, disposés entre deux filaments chauffants adjacents, un filament chauffant étant coupé automatiquement pendant ou à l'issue de sa période de mise à feu.

Selon un second développement de l'invention, la source d'énergie est une source d'énergie lumineuse et les moyens de connexion comportent une pluralité de petits miroirs, disposés successivement sur la trajectoire initiale d'un faisceau lumineux émis par la source d'énergie lumineuse, chaque miroir étant associé à un élément pyrotechnique correspondant, un faisceau lumineux émis par la source d'énergie lumineuse étant réfléchi par le premier miroir rencontré sur sa trajectoire, en direction de l'élément pyrotechnique correspondant, de manière à provoquer la mise à feu de celui-ci pendant une période de mise à feu, le miroir étant écarté de ladite trajectoire, après la période de mise à feu, de manière à ce qu'un faisceau lumineux ultérieur atteigne le miroir suivant.

Selon une variante de réalisation, le miroir peut être déformé ou détruit par l'énergie thermique reçue, après la mise à feu de l'élément pyrotechnique associé. Cette énergie thermique peut être libérée par la combustion de l'élément pyrotechnique associé et/ou, au moins partiellement, fournie par le faisceau lumineux.

Selon une autre variante de réalisation, chaque miroir est disposé sur un support se déformant lorsque la température atteint une valeur prédéterminée.

### Description sommaire des dessins

D'autres avantages et caractéristiques ressortiront plus clairement de la description qui va suivre de modes particuliers de réalisation de l'invention donnés à titre d'exemples non limitatifs, et représentés aux dessins annexés, dans lesquels :
La figure 1 représente, sous forme schématique, un appareil électronique comportant une mini-pile à combustible et dans lequel l'invention peut être mise en oeuvre.
Les figures 2 et 3 illustrent, sous forme schématique, différents modes de réalisation d'un dispositif de commande d'un module selon l'invention
Les figures 4 à 6 représentent un premier mode de réalisation d'un interrupteur sensible à la température d'un dispositif de commande selon la figure 3, respectivement en position ouverte en vue de côté (fig. 4) et en vue de dessus (fig.5), et en position fermée en vue de côté (fig.6).
Les figures 7 et 8 représentent un second mode de réalisation d'un interrupteur sensible à la température respectivement en position ouverte et fermée.
La figure 9 illustre un mode de réalisation particulier d'un dispositif de commande selon la figure 3.
La figure 10 représente un mode de réalisation particulier d'un interrupteur sensible à la pression d'un dispositif de commande selon la figure 3.
La figure 11 représente un autre mode de réalisation particulier d'un dispositif de commande d'un module selon l'invention, dans lequel la source d'énergie est un laser.
La figure 12 illustre une variante de réalisation de supports de miroirs d'un dispositif selon la figure 11.
Les figures 13 et 14 illustrent des signaux S₁ et S₂ respectivement représentatifs de la commande de mise à feu et de la durée de combustion d'un élément pyrotechnique mis à feu dans un module selon l'invention.
Les figures 15 et 16 illustrent un mode de réalisation particulier d'un dispositif selon la figure 11, respectivement en vue de face et en vue de côté.
Les figures 17 et 18 illustrent une variante de réalisation de supports de miroirs d'un dispositif selon les figures 15 et 16, respectivement en perspective et en coupe selon A-A.
Les figures 19 et 20 illustrent une autre variante de réalisation de supports de miroirs d'un dispositif selon les figures 15 et 16, utilisant un alliage à mémoire de forme, respectivement dans des première et seconde positions.

### Description de modes particuliers de réalisation

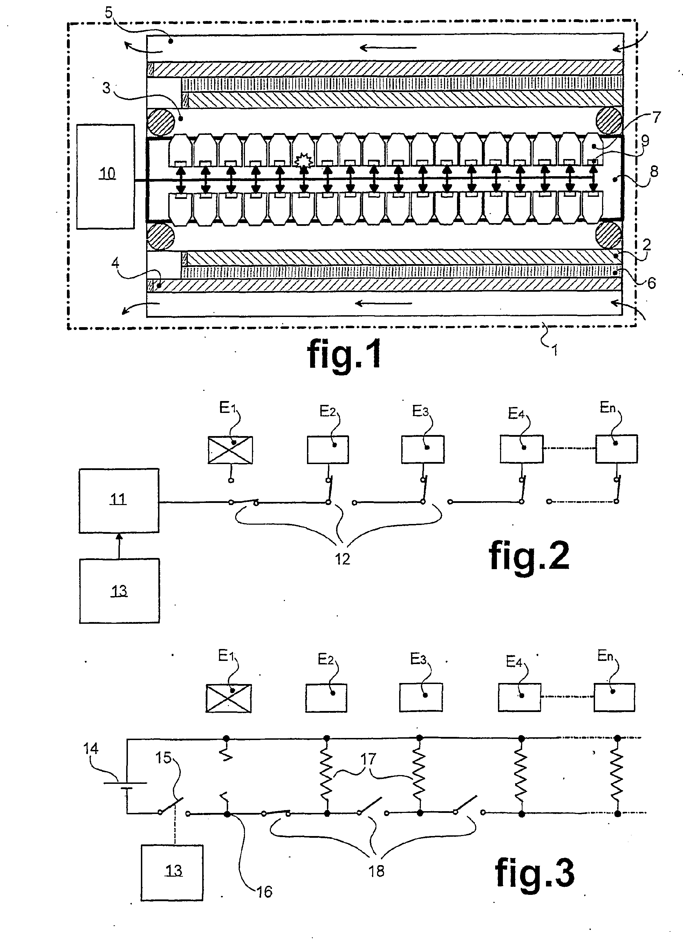

Le dispositif 1 schématisé à la figure 1 comporte une mini-pile à combustible, qui comporte une première électrode 2 en contact avec une chambre 3 d'expansion d'hydrogène. Une seconde électrode 4 est en contact avec une chambre 5 de circulation d'air et un électrolyte 6 est interposé entre les première et seconde électrodes.

Dans cette mini-pile à combustible, l'hydrogène est libéré progressivement, en fonction de la demande en énergie, par la combustion de corps solides 7, en matériau pyrotechnique, situés dans un compartiment central 8. Chaque corps 7, en matériau solide pyrotechnique décomposable par combustion, est associé à un dispositif de mise à feu 9 (par exemple une résistance électrique) destiné à provoquer la combustion du corps 7 associé. En cas de besoin d'hydrogène, un circuit de commande 10 contrôle la mise à feu d'un corps solide 7, en matériau pyrotechnique, non encore utilisé.

L'ensemble des corps 7 et des dispositifs de mise à feu 9 associés est, de préférence, réalisé sous forme d'un module interchangeable, par exemple au format d'une carte de crédit de type classique ou carte à puce, permettant ainsi de changer l'ensemble lorsque tous les corps 7 ont été utilisés.

L'invention, qui s'applique à la commande d'éléments pyrotechniques intégrés dans un module d'approvisionnement en hydrogène, peut notamment être utilisée pour commander la mise à feu des corps solides 7, en matériau pyrotechnique, du dispositif 1 selon la figure 1.

Le dispositif de commande séquentielle d'éléments pyrotechniques Eᵢ, avec i=1 à n, comporte (figure 2) une source d'énergie 11 destinée à être connectée sélectivement à un élément de mise à feu de chacun des éléments pyrotechniques Eᵢ.

Sur la figure 2, des commutateurs 12, à deux positions, connectés en série entre la source d'énergie 11 et le dernier élément pyrotechnique Eₙ sont associés à chaque élément pyrotechnique Eᵢ. Dans une première position, un commutateur 12 connecte à sa borne d'entrée l'élément pyrotechnique Eᵢ associé. Dans une seconde position, il connecte à sa borne d'entrée la borne d'entrée du commutateur 12 associé à l'élément pyrotechnique suivant Eᵢ₊₁. À chaque instant, un seul élément pyrotechnique est connecté à la source d'énergie.

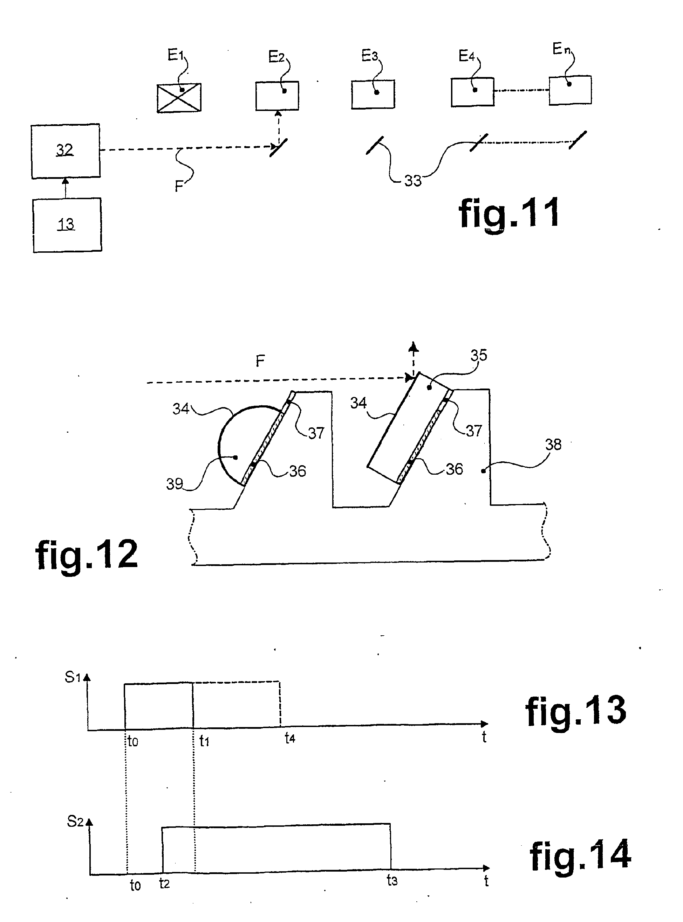

Sur la figure 2, seul le commutateur associé à l'élément E₁ est dans la seconde position, tous les autres commutateurs étant dans la première position. Ainsi, seul l'élément E₂ est connecté à la source d'énergie 11. L'élément E₁, qui le précède, a déjà été utilisé, ce qui est représenté schématiquement sur la figure 2 par une croix en travers de l'élément E₁. Le dispositif de commande comporte un circuit 13 de contrôle de la source d'énergie 11, qui fournit un signal S₁ de commande de mise à feu (figure 13) provoquant, pendant une période de mise à feu (t₀-t₁) prédéterminée, de quelques millisecondes, l'application à l'entrée de la série de commutateurs 12 de l'énergie en provenance de la source d'énergie 11.

Dans la configuration représentée à la figure 2, l'application d'un signal de mise à feu S₁ provoque la mise à feu de l'élément E₂, qui est le seul connecté à la source d'énergie. Cette mise à feu provoque tout d'abord la combustion de l'élément E₂, pendant une durée de combustion comprise entre des instants t₂ et t₃ (figure 14). L'instant t₂ est compris dans la période de mise à feu (t₀-t₁), la combustion se poursuivant après la période de mise à feu jusqu'à l'instant t₃.

Un commutateur 12 passe de la première à la seconde position après la période de mise à feu de l'élément Eᵢ correspondant, préparant ainsi automatiquement la connexion à la source d'énergie 11 de l'élément pyrotechnique Eᵢ₊₁ suivant.

Dans un mode de réalisation préférentiel, les commutateurs 12 sont sensibles à la température ou à la pression, c'est-à-dire qu'ils passent de la première à la seconde position lorsque leur température ou la pression dépasse une valeur prédéterminée. Chaque commutateur 12 est situé à proximité de l'élément pyrotechnique associé de manière à ce que la combustion de celui-ci provoque une augmentation de température ou de pression suffisante pour faire basculer le commutateur concerné, et celui-ci seulement, de la première à la seconde position, entre l'instant t₁ correspondant à la fin de la période de mise à feu et l'instant t₃ correspondant à la fin de la combustion.

Ainsi le circuit de contrôle 13 déclenche, lorsque c'est nécessaire, la combustion d'un élément pyrotechnique Eᵢ et de celui-ci seulement. La combustion de cet élément modifie l'état du commutateur 12 situé entre cet élément Eᵢ et le suivant Eᵢ₊₁ de manière à ce qu'une activation ultérieure du circuit de contrôle déclenche la combustion de l'élément suivant et de celui-ci seulement. Le dispositif provoque ainsi séquentiellement, à la demande, la combustion successive des éléments pyrotechniques du module dans lequel ils sont intégrés.

Dans le mode de réalisation particulier de la figure 3, la source d'énergie est une source d'énergie électrique, par exemple une pile ou une batterie 14. Un interrupteur 15, normalement ouvert, est interposé entre la pile 14 et une borne d'entrée 16. L'interrupteur 15 est fermé par le circuit de contrôle 13 pendant les périodes de mise à feu. Les éléments de mise à feu des éléments pyrotechniques Eᵢ sont constitués par des filaments chauffants 17 associés à chacun des éléments pyrotechniques. Tous les filaments 17 sont connectés en permanence à l'une des bornes de la pile. À un instant donné, un seul filament chauffant 17 est connecté à la borne d'entrée 16. Ainsi, en position de mise à feu, un filament chauffant 17 et un seul est connecté en parallèle sur la pile 14. La connexion d'un filament chauffant 17 à la borne d'entrée 16 est réalisée par l'intermédiaire d'une succession d'interrupteurs 18, disposés chacun entre deux filaments chauffants adjacents et connectés en série entre la borne d'entrée et le filament chauffant associé au dernier élément pyrotechnique Eₙ. Le filament chauffant associé au premier élément pyrotechnique E₁ est connecté directement à la borne d'entrée 16, tandis que le filament chauffant associé à un élément pyrotechnique Eᵢ est connecté à la borne d'entrée par l'intermédiaire des interrupteurs 18 associés aux éléments pyrotechniques E₁ à Eᵢ₋₁ le précédant. Les interrupteurs 18, normalement ouverts, sont fermés après la période de mise à feu de l'élément pyrotechnique associé, provoquant ainsi automatiquement la connexion de la borne d'entrée 16 au filament chauffant associé à l'élément pyrotechnique suivant.

Les interrupteurs 18 sont sensibles à la température ou à la pression et passent de la position ouverte à la position fermée lorsque leur température ou la pression dépasse une valeur prédéterminée. Chaque interrupteur 18 est situé à proximité de l'élément pyrotechnique associé de manière à ce que la combustion de celui-ci provoque une augmentation de température ou de pression suffisante pour faire basculer l'interrupteur concerné, et celui-ci seulement, de la position ouverte à la position fermée, entre l'instant t₁ correspondant à la fin de la période de mise à feu et l'instant t₃ correspondant à la fin de la combustion.

Pour éviter la mise en parallèle simultanée de plusieurs filaments chauffants 17 aux bornes de la pile 14, un filament chauffant 17 est automatiquement coupé durant ou à l'issue de sa période de mise à feu. Cette coupure du filament peut être provoquée par sa fusion à la température à laquelle il est porté soit par effet Joule soit par la combustion de l'élément pyrotechnique.

Le matériau, le positionnement et les dimensions des filaments chauffants 17, des éléments pyrotechniques Eᵢ et des interrupteurs 18 sont choisis de manière à ce que la mise en parallèle d'un filament chauffant sur la pile 14 pendant sa période de mise à feu suffise pour provoquer la combustion de l'élément pyrotechnique associé et, après la période de mise à feu, la fermeture de l'interrupteur 18 associé et la coupure du filament chauffant considéré, préparant ainsi automatiquement la connexion à la source d'énergie du filament chauffant suivant.

Les filaments chauffants 17 peuvent être réalisés dans un grand nombre de matériaux résistants. À titre d'exemples non limitatifs, ils peuvent être réalisés à base de nickel (Ni), de chrome (Cr), de tantale (Ta) ou d'un alliage de ces métaux. Dans un mode de réalisation préféré, la valeur de la résistance sera avantageusement choisie pour que la puissance dissipée dans le filament soit suffisante pour provoquer sa rupture, à la manière d'un fusible, en même temps qu'elle déclenche la mise à feu.

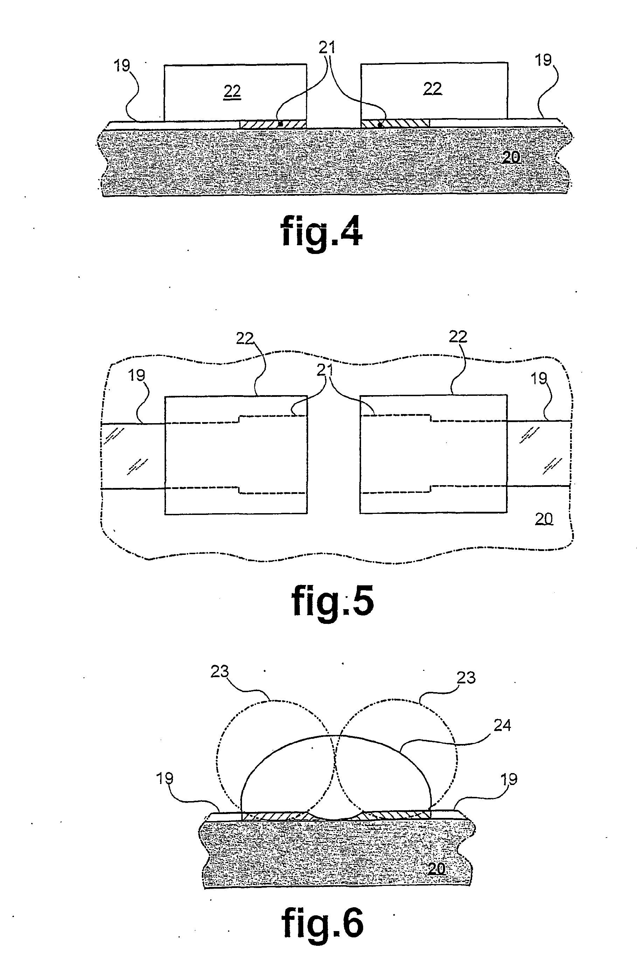

Les figures 4 à 8 illustrent deux modes particuliers de réalisation d'un interrupteur sensible à la température. Ces modes de réalisation utilisent des techniques connues dans la réalisation de connexions électriques dans les circuits intégrés, notamment des techniques de type dites « Flip chip ».

Dans le mode de réalisation des figures 4 à 6, deux pistes 19, électriquement conductrices, formées sur un support isolant 20, sont destinées à être connectées ou déconnectées par un interrupteur 18 sensible à la température.
Les deux pistes 19 sont normalement séparées par un intervalle de quelques micromètres (position ouverte de l'interrupteur). Chaque piste est munie à son extrémité d'une surface mouillable 21, par exemple constituée par une fine pellicule d'or. Un matériau à faible point de fusion, de préférence, de l'indium, de l'étain ou un alliage d'étain et de plomb, se déformant lorsque la température atteint une valeur prédéterminée, est déposé sous la forme d'une galette 22, plane, sur l'extrémité de chaque piste 19, de manière à recouvrir la surface mouillable 21 et une partie adjacente de la piste. Les deux galettes 22 sont séparées par le même intervalle que les pistes 19 en position ouverte de l'interrupteur. Lorsque la température atteint une valeur suffisante, elle provoque la fusion des galettes. À l'état liquide, les forces de tension superficielles modifient la forme des galettes. Les surfaces 21 étant recouvertes par un matériau mouillable pour le matériau constituant les galettes, des billes se forment sur les surfaces mouillables 21. Le volume des billes 23 est suffisamment important pour que les billes se joignent et forment une gouttelette 24 unique connectant alors électriquement et définitivement les pistes 19 (position fermée de l'interrupteur). Les galettes 22 peuvent être de forme rectangulaire, circulaire ou ovoïde.

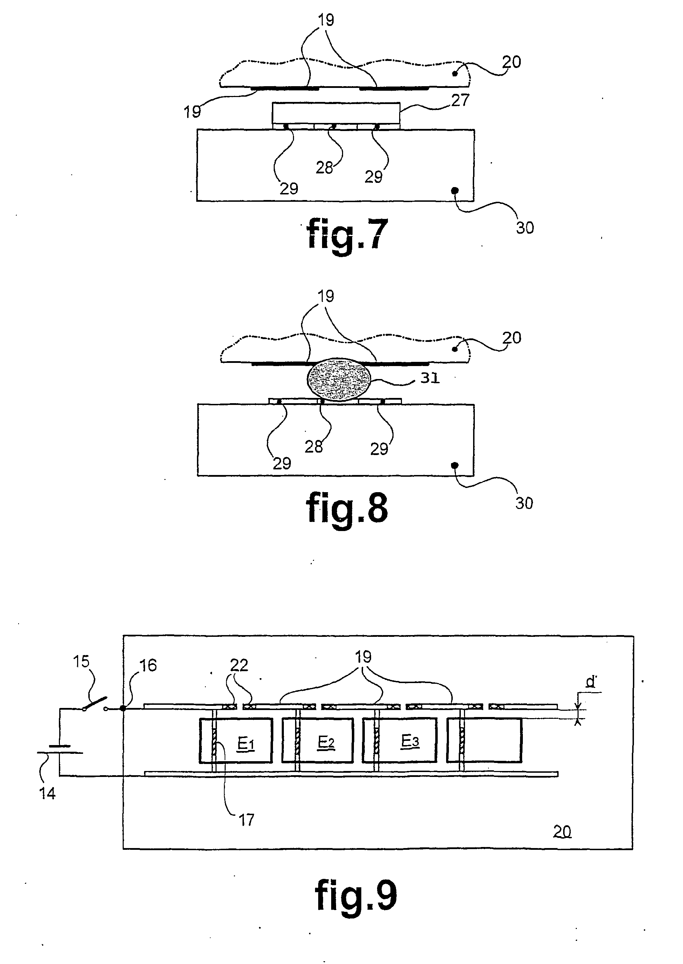

Dans la variante de réalisation représentée aux figures 7 et 8, les pistes 19 réalisées sur le support 20 sont disposées face à une galette 27. La galette 27 repose sur une surface mouillable 28 disposées centralement par rapport à des surfaces non mouillables 29 formées sur un composant 30. La galette 27, de préférence de forme circulaire, peut être disposée sur un plot central 28 en métal entouré par un anneau 29 en un matériau non mouillable, par exemple formé par une couche de dioxyde de silicium (SiO₂). En position ouverte de l'interrupteur, il n'y a pas de contact entre la galette 27 et les pistes 19. L'élévation de la température provoque une fusion de la galette, dont le matériau se déforme et se concentre sur la surface mouillable 28, formant finalement une bille 31 venant en contact avec l'extrémité des deux pistes 19 et établissant ainsi une connexion électrique entre les pistes (position fermée de l'interrupteur).

La figure 9 illustre un exemple de réalisation d'un dispositif de commande selon la figure 3, réalisé en technique planaire en utilisant des interrupteurs du type décrit aux figures 4 à 6. Le substrat 20 porte à la fois les pistes 19, aux extrémités desquelles sont déposées les galettes 22, les filaments chauffants 17 et les éléments pyrotechniques. On obtient ainsi un mode de réalisation très compact, dans lequel le moment de la fermeture des interrupteurs provoqué par la fusion des galettes 22 peut être ajusté par le choix de la distance d séparant les éléments pyrotechniques et les galettes 22. Les pistes 19 peuvent avantageusement s'étendre sous les éléments pyrotechniques Eᵢ de façon à ajuster l'échange thermique par conduction entre les galettes 22 et les éléments pyrotechniques.

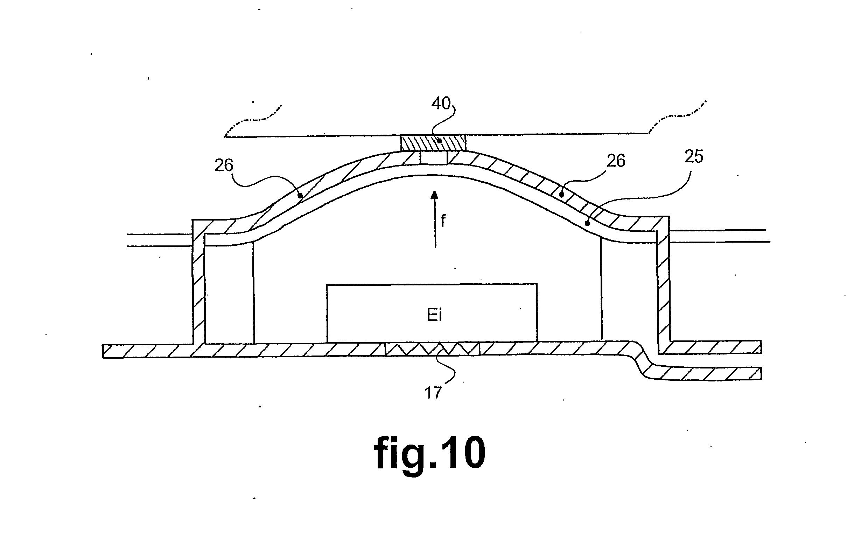

Dans le mode de réalisation représenté à la figure 10, les interrupteurs 18 (figure 3) sont sensibles à la pression. La combustion d'un élément pyrotechnique Eᵢ, disposé au-dessus d'un filament chauffant 17, génère du gaz, dont la pression est utilisée pour déplacer une membrane souple, utilisée pour fermer l'interrupteur. Sur la figure 10, la membrane souple 25 porte deux pistes 26 électriquement conductrices, dont les extrémités sont séparées. Lorsque la pression générée par les gaz de combustion de l'élément pyrotechnique associé est suffisante, une force f déforme la membrane 25, qui se déplace vers le haut. Les extrémités des pistes 26 viennent alors en contact avec un plot métallique 40, qui assure ainsi la continuité entre les deux pistes et la fermeture de l'interrupteur concerné. Ce type de réalisation est bien adapté à la commande séquentielle de microvannes appartenant à des dispositifs de microfluidique associés à un module électronique contenant un dispositif selon l'invention.

L'invention n'est pas limitée à l'utilisation d'une source d'énergie électrique. Dans le mode de réalisation particulier de la figure 11, la source d'énergie est une source d'énergie lumineuse, par exemple un laser 32. La mise à feu d'un élément pyrotechnique Eᵢ est alors provoqué par un faisceau lumineux F émis par le laser 32, sous le contrôle du circuit de contrôle 13, pendant la période de mise à feu t₀-t₁ et atteignant l'élément pyrotechnique concerné et uniquement celui-ci.

La connexion entre le laser et les éléments pyrotechniques est réalisée par l'intermédiaire de petits miroirs 33 associés à chacun des éléments pyrotechniques. Les miroirs 33 sont disposés les uns derrière les autres sur la trajectoire initiale d'un faisceau lumineux F émis par le laser 32. Ainsi, sur la figure 11, le faisceau lumineux F émis par le laser étant horizontal, tous les miroirs 33 sont disposés sur une même ligne horizontale. Lorsque le faisceau lumineux F émis par le laser atteint le premier miroir rencontré sur sa trajectoire, celui-ci le réfléchit en direction de l'élément pyrotechnique associé (E₂), provoquant la mise à feu de celui-ci.

Après la période de mise à feu, le miroir est écarté de la trajectoire initiale du faisceau lumineux F émis par le laser. Ceci est réalisé, de préférence, par déformation ou destruction du miroir par l'énergie thermique reçue, après la mise à feu de l'élément pyrotechnique associé. Le miroir 33 est, de préférence, constitué par une mince couche réfléchissante, de 500 à 600 Angstrôms par exemple, qui résiste pendant le temps nécessaire à la mise à feu de l'élément pyrotechnique correspondant et est détruite par fusion sous l'effet de l'énergie thermique. Une partie de l'énergie thermique peut provenir du faisceau lumineux.

La déformation ou la destruction du miroir ayant servi à la mise à feu d'un élément pyrotechnique permet de l'écarter de la trajectoire initiale du faisceau lumineux F. Ainsi lors de la période de mise à feu suivante, ce miroir n'empêche plus le faisceau lumineux F d'atteindre le miroir suivant, destiné à diriger l'énergie lumineuse sur l'élément pyrotechnique suivant. Si l'énergie thermique détruisant le miroir 33 est fournie essentiellement par le faisceau lumineux, la durée d'émission t₀-t₄ du laser (figure 13) doit être telle que le miroir concerné soit écarté avant l'instant t₄ sans que la durée séparant l'instant où le miroir est écarté et la fin de l'émission du laser soit suffisante pour provoquer la mise à feu de l'élément pyrotechnique suivant.

Lorsque la température provoque la fusion de la couche réfléchissante, celle-ci doit être réalisée sur un support transparent laissant passer le faisceau lumineux F après élimination du miroir.

Dans une variante de réalisation, chaque miroir est disposé sur un support qui est détruit ou déformé par l'énergie thermique après la période de mise à feu, de manière à écarter le miroir de la trajectoire du faisceau lumineux F. Un exemple de ce type est illustré à la figure 12. Chaque miroir 33 est constitué par une mince couche réfléchissante 34 déposée sur un support constitué par une galette 35. La galette 35 est disposée sur une surface mouillable 36 et sur une surface non mouillable 37 adjacente, sur un support de base 36. La configuration de l'ensemble est telle que la couche réfléchissante 34 fait un angle de 45° avec le faisceau lumineux, pour réfléchir celui-ci en direction de l'élément pyrotechnique correspondant. La galette 34 est réalisée en un matériau à faible point de fusion, se déformant lorsque sa température atteint une valeur prédéterminée. Le support du miroir est représenté sur la partie gauche de la figure 12 après déformation. Dans ce mode de réalisation, l'élévation de température provoquée par le faisceau lumineux a conduit, de manière analogue à la déformation des galettes 22 et 31 des figures 4 et 10, à la formation d'une bille 39 située uniquement sur la surface mouillable 36. La couche réfléchissante 34 portée par la surface externe de la galette a été déformée simultanément et ne se trouve plus sur la trajectoire du faisceau lumineux F. La surface non mouillable 37 et le support de base 38 peuvent être en matériaux transparents, laissant passer le faisceau lumineux F après déformation de la galette 35.

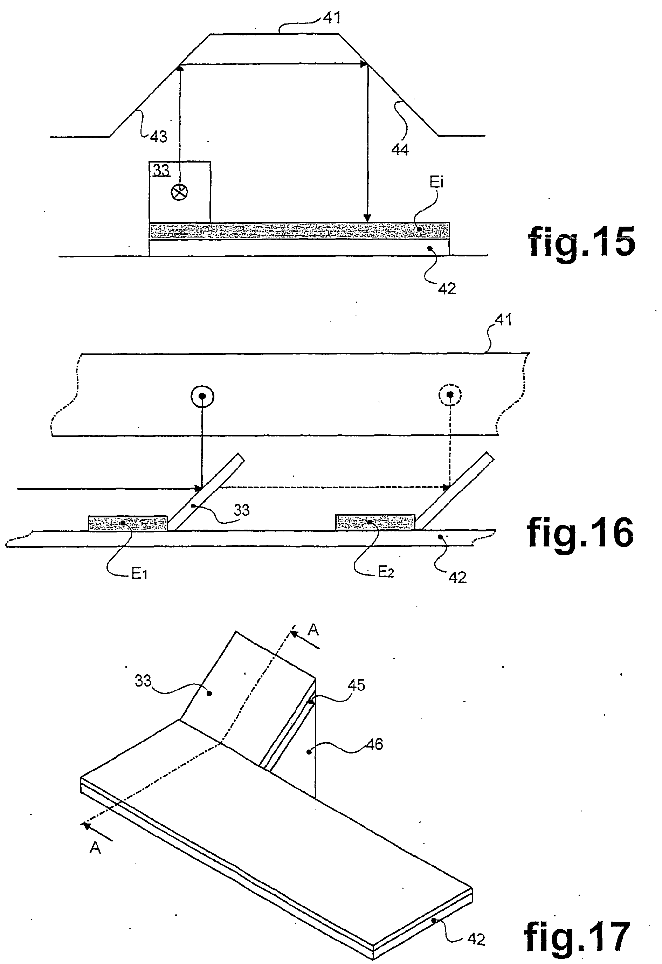

Dans un mode de réalisation particulier d'un dispositif selon la figure 11, illustré aux figures 15 et 16, le faisceau lumineux F réfléchi par un miroir 33 est dirigé vers un élément réfléchissant 41, destiné à le diriger vers l'élément pyrotechnique Eᵢ associé. Dans ce mode de réalisation, un même support 42 porte les miroirs 33 et les éléments pyrotechniques, réalisés sous la forme de couches de matériau pyrotechnique déposé sur le support 42. L'élément réfléchissant 41 illustré sur la figure 15 a sensiblement la forme d'une gouttière présentant deux parois internes opposées, inclinées à 45°, tournées vers le support 42 et recouvertes chacune d'une couche réfléchissante, formant ainsi des premier et second miroirs 43 et 44. Un faisceau lumineux réfléchi par un miroir 33 est dirigé, verticalement vers le haut sur la figure 15, vers le premier miroir 43, qui le réfléchit, horizontalement sur la figure 15, en direction du second miroir 44. Ce dernier renvoie le faisceau, verticalement vers le bas sur la figure 15, en direction de l'élément pyrotechnique associé de manière à provoquer la mise à feu de celui-ci.

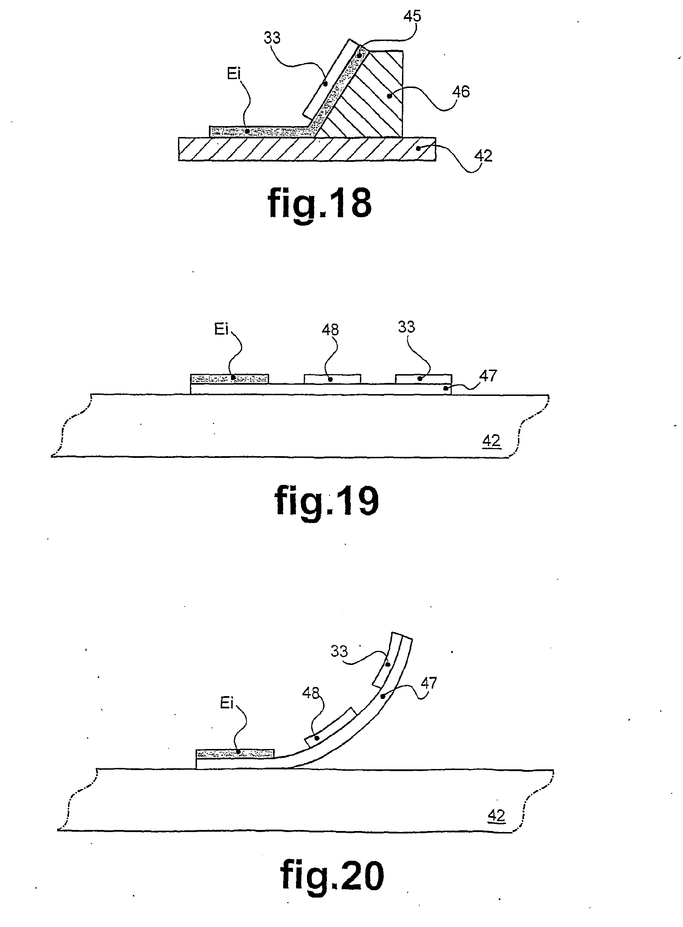

Une variante de réalisation de supports de miroirs d'un dispositif selon les figures 15 et 16, est illustrée aux figures 17 et 18. Selon cette variante de réalisation, une couche 45 de matériau pyrotechnique est déposée sur un élément 46, transparent, de support d'un miroir 33. Le miroir 33 est alors constitué par une mince couche réfléchissante déposée sur la couche 45 de matériau pyrotechnique. Celle-ci est en contact avec la couche de matériau pyrotechnique constituant l'élément pyrotechnique Eᵢ associé, dont elle constitue un prolongement. De cette manière, la mise à feu de l'élément pyrotechnique provoque également la combustion de la couche 45 et la disparition du miroir 33 associé.

Les figures 19 et 20 illustrent une autre variante de réalisation de supports de miroirs d'un dispositif selon les figures 15 et 16, utilisant un alliage à mémoire de forme. Un support intermédiaire 47, en matériau déformable, est disposé sur le support 42. L'élément pyrotechnique Eᵢ et le miroir 33 associés sont disposés à deux extrémités opposées du support intermédiaire 47 et séparés par une zone intermédiaire sur laquelle est disposé un élément 48 constitué par un alliage à mémoire de forme. L'alliage constituant l'élément 48 peut, de manière connue, être à base de nickel, de titane, de certaines matières plastiques ou de tout autre matériau approprié lui conférant les propriétés d'un alliage à mémoire de forme. Lors de la fabrication, le support intermédiaire 47 prend initialement une première position, horizontale sur la figure 19, dans laquelle il repose sur le support 42. Avant utilisation du dispositif, l'élément 48 à mémoire de forme est soumis à des contraintes et à un traitement thermique le déformant et amenant le support intermédiaire 47, dont il est solidaire dans la zone intermédiaire, dans une seconde position illustrée à la figure 20. Dans cette seconde position, la zone intermédiaire du support intermédiaire 47 est déformée de manière à se courber vers le haut, amenant le miroir 33 dans une position où il fait un angle de 45° environ avec l'horizontale. Le miroir 33 est alors en mesure de réfléchir un faisceau lumineux horizontal en provenance du laser 32. La combustion de l'élément pyrotechnique associé provoque une augmentation de température de l'élément 48 notamment. Lorsque la température de l'alliage à mémoire de forme atteint la température de récupération de celui-ci, l'élément 48 reprend sa forme initiale, ramenant le support intermédiaire 47 et le miroir 33 qu'il porte dans la position initiale de la figure 21. Le support 47 du miroir 33 a ainsi été déformé de manière à écarter le miroir de la trajectoire du faisceau lumineux émis par le laser 32.

L'élément 48 peut éventuellement constituer la zone intermédiaire du support intermédiaire 47.

## Revendications

1. Module d'approvisionnement en hydrogène **caractérisé en ce qu'**il comporte des moyens pour le déclenchement et le contrôle de la libération progressive d'hydrogène dans une mini-pile à combustible, l'hydrogène étant foumi, après leur mise à feu, par la combustion d'une pluralité d'éléments pyrotechniques (Eᵢ) intégrés dans le module, lesdits moyens comportant une source d'énergie (11) et un dispositif de commande séquentielle de la mise à feu des éléments pyrotechniques comportant des moyens sélectifs de connexion de la source d'énergie à un élément de mise à feu de chacun des éléments pyrotechniques, les moyens de connexion comportant des moyens (12, 18, 33) pour connecter à la source d'énergie, pendant une période de mise à feu prédéterminée (t₀-t₁), un seul élément de mise à feu associé à un élément pyrotechnique prédéterminé et pour préparer automatiquement, après la période de mise à feu, la connexion à la source d'énergie d'un élément de mise à feu d'un autre élément pyrotechnique.

2. Module selon la revendication 1, **caractérisé en ce que** les moyens de connexion comportent des moyens sensibles à la température pour préparer la connexion à la source d'énergie (11) d'un élément de mise à feu d'un autre élément pyrotechnique.

3. Module selon la revendication 2, **caractérisé en ce que** les moyens de connexion sensibles à la température comportent un matériau (22, 27) à faible point de fusion, se déformant (24, 31) lorsque la température atteint une valeur prédéterminée de manière à établir une connexion électrique entre deux pistes (19) d'un circuit électrique.

4. Module selon la revendication 3, **caractérisé en ce que** le matériau à faible point de fusion est déposé sous la forme d'une galette (22) sur l'extrémité de chaque piste (19), de manière à former une gouttelette unique (24) connectant électriquement les pistes lorsque la température atteint une valeur prédéterminée.

5. Module selon la revendication 1, **caractérisé en ce que** les moyens de connexion comportent des moyens sensibles à la pression pour préparer la connexion à la source d'énergie (11) d'un élément de mise à feu d'un autre élément pyrotechnique.

6. Module selon la revendication 5, **caractérisé en ce que** les moyens de connexion sensibles à la pression comportent une membrane souple (25) déformable par la pression générée par les gaz de combustion de l'élément pyrotechnique associé de manière à établir une connexion électrique entre deux pistes (26) d'un circuit électrique.

7. Module selon l'une quelconque des revendications 2 à 6, **caractérisé en ce que**, la source d'énergie étant une source d'énergie électrique (14), les moyens de connexion comportent une borne d'entrée (16), des moyens (18) pour connecter la borne d'entrée à la source d'énergie pendant chaque période de mise à feu, la borne d'entrée (16) étant, à un instant donné, connectée à un élément de mise à feu (17) d'un seul élément pyrotechnique (E₂), la combustion dudit élément pyrotechnique actionnant, après ladite période de mise à feu, des moyens (18) de connexion sensibles à la température ou à la pression provoquant automatiquement la connexion de la borne d'entrée à un élément de mise à feu d'un autre élément pyrotechnique.

8. Module selon la revendication 7, **caractérisé en ce que** les éléments de mise à feu sont des filaments chauffants (17).

9. Module selon la revendication 8, **caractérisé en ce que**, en position de mise à feu, le filament chauffant (17) concerné est connecté aux bornes de la source d'énergie électrique (14), les moyens de connexion sensibles à la température ou à la pression constituant des interrupteurs (18), normalement ouverts, disposés entre deux filaments chauffants adjacents, un filament chauffant (17) étant coupé automatiquement pendant ou à l'issue de sa période de mise à feu (t₀-t₁).

10. Module selon l'une des revendications 1 et 2, **caractérisé en ce que** la source d'énergie est une source d'énergie lumineuse (32) et **en ce que** les moyens de connexion comportent une pluralité de petits miroirs (33), disposés successivement sur la trajectoire initiale d'un faisceau lumineux (F) émis par la source d'énergie lumineuse, chaque miroir étant associé à un élément pyrotechnique (Eᵢ) correspondant, un faisceau lumineux (F) émis par la source d'énergie lumineuse étant réfléchi par le premier miroir rencontré sur sa trajectoire, en direction de l'élément pyrotechnique (E₂) correspondant, de manière à provoquer la mise à feu de celui-ci pendant une période de mise à feu, le miroir étant écarté de ladite trajectoire, après la période de mise à feu, de manière à ce qu'un faisceau lumineux ultérieur atteigne le miroir suivant.

11. Module selon la revendication 10, **caractérisé en ce qu'**il comporte un élément réfléchissant (41), en forme de gouttière, destiné à diriger le faisceau lumineux réfléchi par un des miroirs (33) vers l'élément pyrotechnique associé.

12. Module selon l'une des revendications 10 et 11, **caractérisé en ce que** le miroir (33) est déformé ou détruit par l'énergie thermique reçue, après la mise à feu de l'élément pyrotechnique associé.

13. Module selon la revendication 12, **caractérisé en ce que** l'énergie thermique est libérée par la combustion de l'élément pyrotechnique associé.

14. Module selon l'une des revendications 12 et 13, **caractérisé en ce que** l'énergie thermique est, au moins partiellement, fournie par le faisceau lumineux.

15. Module selon l'une des revendications 10 et 11, **caractérisé en ce que** chaque miroir est disposé sur un support (35, 47), se déformant (39) lorsque la température atteint une valeur prédéterminée.

16. Module selon la revendication 15, **caractérisé en ce que** le support de miroir comporte un élément (48) constitué par un alliage à mémoire de forme

17. Module selon l'une quelconque des revendications 10 à 16, **caractérisé en ce que** la source d'énergie (32) est un laser.

18. Module selon l'une quelconque des revendications 10 à 17, **caractérisé en ce que** les miroirs sont réalisés sous la forme de minces couches réfléchissantes (34).

19. Module selon l'une quelconque des revendications 1 à 18, **caractérisé en ce qu'**il est contenu dans une carte.

## Claims

1. A module for supplying hydrogen **characterized in that** it comprises means for triggering and controlling gradual release of hydrogen in a fuel mini-cell, the hydrogen being supplied, after ignition of the latter, by combustion of a plurality of pyrotechnic elements (Eᵢ) integrated in the module, said means comprising an energy source (11) and a device for sequential control of ignition of the pyrotechnic elements comprising means for selectively connecting the energy source to an ignition element of each of the pyrotechnic elements, the connecting means comprising means (12, 18, 33) for connecting a single ignition element associated with a predetermined pyrotechnic element to the energy source during a preset ignition time (t₀-t₁), and for automatically preparing connection of another pyrotechnic element to the energy source after the ignition time.

2. Module according to claim 1, **characterized in that** the connecting means comprise temperature-sensitive means to prepare the connection of an ignition element of another pyrotechnic element to the energy source (11).

3. Module according to claim 2, **characterized in that** the temperature-sensitive connecting means comprise a material (22, 27) with a low melting point that deforms (24, 31) when the temperature reaches a preset value so as to establish an electrical connection between two tracks (19) of an electric circuit.

4. Module according to claim 3, **characterized in that** the material with a low melting point is deposited in the form of a wafer (22) on the end of each track (19) so as to form a single trough (24) electrically connecting the tracks when the temperature reaches a preset value.

5. Module according to claim 1, **characterized in that** the connecting means comprise pressure-sensitive means to prepare connection of an ignition element of another pyrotechnic element to the energy source (11).

6. Module according to claim 5, **characterized in that** the pressure-sensitive connecting means element comprise a flexible membrane (25) deformable by the pressure generated by the combustion gases of the associated pyrotechnic element so as to establish an electrical connection between two tracks (26) of an electric circuit.

7. Module according to any one of claims 2 to 6, **characterized in that**, the energy source being an electrical energy source (14), the connecting means comprise an input terminal (16), and means (18) for connecting the input terminal to the energy source during each ignition period, the input terminal (16) being, at any given time, connected to an ignition element (17) of a single pyrotechnic element (E₂), combustion of said pyrotechnic element actuating, after said ignition period, connecting means (18) sensitive to temperature or pressure automatically causing connection of the input terminal to an ignition element of another pyrotechnic element.

8. Module according to claim 7, **characterized in that** the ignition elements are heating filaments (17).

9. Module according to claim 8, **characterized in that**, in the ignition position, the heating filament (17) concerned is connected to the terminals of the electrical energy source (14), the connecting means sensitive to temperature or pressure constituting normally open switches (18) arranged between two adjacent heating filaments, a heating filament (17) being automatically cut off during or at the end of its ignition period (t₀-t₁).

10. Module according to one of claims 1 and 2, **characterized in that** the energy source is a light energy source (32) and that the connecting means comprise a plurality of small mirrors (33) successively arranged on the initial path of a light beam (F) emitted by the light energy source, each mirror being associated with a corresponding pyrotechnic element (Eᵢ), a light beam (F) emitted by the light energy source being reflected by the first mirror encountered on its path, in the direction of the corresponding pyrotechnic element (E₂), so as to cause ignition of the latter during an ignition period, the mirror being removed from said path after the ignition period so that a subsequent light beam reaches the next mirror.

11. Module according to claim 10, **characterized in that** it comprises a reflecting element (41) in the form of a trough designed to direct the light beam reflected by one of the mirrors (33) towards the associated pyrotechnic element.

12. Module according to one of claims 10 and 11, **characterized in that** the mirror (33) is deformed or destroyed by the thermal energy received, after ignition of the associated pyrotechnic element.

13. Module according to claim 12, **characterized in that** the thermal energy is released by combustion of the associated pyrotechnic element.

14. Module according to one of claims 12 and 13, **characterized in that** the thermal energy is at least partly supplied by the light beam.

15. Module according to one of claims 10 and 11, **characterized in that** each mirror is arranged on a support (35, 47) that is deformed (39) when the temperature reaches a preset value.

16. Module according to claim 15, **characterized in that** the mirror support comprises an element (48) formed by a shape memory alloy.

17. Module according to any one of claims 10 to 16, **characterized in that** the energy source (32) is a laser.

18. Module according to any one of claims 10 to 17, **characterized in that** the mirrors are achieved in the form of thin reflecting layers (34).

19. Module according to any one of claims 1 to 18, **characterized in that** it is contained in a card.

## Patentansprüche

1. Modul zur Versorgung mit Wasserstoff, **dadurch gekennzeichnet, dass** es Mittel zum Auslösen und Steuern der schrittweisen Freisetzung von Wasserstoff in einer Mini-Brennstoffzelle umfasst, wobei der Wasserstoff durch die Verbrennung einer Mehrzahl pyrotechnischer, in das Modul integrierter Elemente (Eᵢ) nach deren Zündung entsteht, welche Mittel eine Energiequelle (11) und eine Vorrichtung zur sequenziellen Steuerung der Zündung der pyrotechnischen Elemente umfassen, die selektive Mittel zum Verbinden der Energiequelle mit einem Zündungselement jedes der pyrotechnischen Elemente umfasst, und wobei die Verbindungsmittel Mittel (12, 18, 33) zum Verbinden eines einzigen, mit einem vorbestimmten pyrotechnischen Element verbundenen Zündungselements mit der Energiequelle während einer vorbestimmten Zündungszeit (t₀-t₁) und zur automatischen Vorbereitung des Verbindens eines Zündungselements eines anderen pyrotechnischen Elements mit der Energiequelle nach der Zündungszeit aufweisen.

2. Modul nach Anspruch 1, **dadurch gekennzeichnet, dass** die Verbindungsmittel temperaturempfindliche Mittel zur Vorbereitung des Verbindens eines Zündungselements eines anderen pyrotechnischen Elements mit der Energiequelle (11) umfassen.

3. Modul nach Anspruch 2, **dadurch gekennzeichnet, dass** die temperaturempfindlichen Verbindungsmittel ein Material (22, 27) mit niedrigem Schmelzpunkt umfassen, das sich verformt (24, 31), wenn die Temperatur einen vorbestimmten Wert erreicht, um so eine elektrische Verbindung zwischen zwei Bahnen (19) eines Stromkreises herzustellen.

4. Modul nach Anspruch 3, **dadurch gekennzeichnet, dass** das Material mit niedrigem Schmelzpunkt in Form eines Plättchens (22) auf das Ende jeder Bahn (19) aufgebracht wird um einen einzigen Tropfen (24) zu bilden, der die Bahnen elektrische verbindet, wenn die Temperatur einen vorbestimmten Wert erreicht.

5. Modul nach Anspruch 1, **dadurch gekennzeichnet, dass** die Verbindungsmittel druckempfindliche Mittel zur Vorbereitung des Verbindens eines Zündungselements eines anderen pyrotechnischen Elements mit der Energiequelle (11) umfassen.

6. Modul nach Anspruch 5, **dadurch gekennzeichnet, dass** die druckempfindlichen Verbindungsmittel eine elastische Membran (25) umfassen, die sich durch den von den Verbrennungsgasen des entsprechenden pyrotechnischen Elements erzeugten Druck verformt und so eine elektrische Verbindung zwischen zwei Bahnen (26) eines Stromkreises herstellt.

7. Modul nach einem der Ansprüche 2 bis 6, **dadurch gekennzeichnet, dass** die Verbindungsmittel, da es sich bei der Energiequelle um eine elektrische Energiequelle (14) handelt, eine Eingangsklemme (16), Mittel (18) zum Verbinden der Eingangsklemme mit der Energiequelle während jeder Zündungszeit umfassen, wobei die Eingangsklemme (16) zu einem gegebenen Zeitpunkt mit einem Zündungselement (17) eines einzigen pyrotechnischen Elements (E₂) verbunden wird und die Verbrennung dieses pyrotechnischen Elements nach der Zündungszeit temperatur- oder druckempfindliche Verbindungsmittel (18) aktiviert, die automatisch die Verbindung der Eingangsklemme mit einem Zündungselement eines weiteren pyrotechnischen Elements herstellt.

8. Modul nach Anspruch 7, **dadurch gekennzeichnet, dass** die Zündungselemente Heizdrähte (17) sind.

9. Modul nach Anspruch 8, **dadurch gekennzeichnet, dass** in der Zündungsposition der betroffene Heizdraht (17) an die Klemmen der elektrischen Energiequelle (14) gelegt wird, wobei die temperatur- oder druckempfindlichen Mittel Schalter (18) sind, die normalerweise offen sind und die zwischen zwei angrenzenden Heizdrähten angeordnet sind, wobei ein Heizdraht (17) während seiner Zündungszeit (t₀-t₁) oder an deren Ende automatisch abgeklemmt wird.

10. Modul nach einem der Ansprüche 1 und 2, **dadurch gekennzeichnet, dass** die Energiequelle eine Lichtenergiequelle (32) ist und die Verbindungsmittel eine Mehrzahl kleiner Spiegel (33) umfassen, die nacheinander auf der ursprünglichen Bahn eines von der Lichtenergiequelle ausgesandten Lichtstrahls (F) angeordnet sind, wobei jeder Spiegel einem entsprechenden pyrotechnischen Element (Eᵢ) zugeordnet ist und ein von der Lichtenergiequelle ausgesandter Lichtstrahl (F) in Richtung des entsprechenden pyrotechnischen Elements (E₂) von dem ersten Spiegel reflektiert wird, auf den er auf seiner Bahn trifft, und so dessen Zündung während einer Zündungszeit bewirkt, wobei der Spiegel nach dieser Zündungszeit aus dieser Bahn entfernt wird, sodass ein weiterer Lichtstrahl den nächsten Spiegel erreicht.

11. Modul nach Anspruch 10, **dadurch gekennzeichnet, dass** es ein reflektierendes Element (41) in Form einer Rinne umfasst, das den von einem der Spiegel (33) reflektierten Lichtstrahl in Richtung auf das entsprechende pyrotechnische Element lenken soll.

12. Modul nach einem der Ansprüche 10 und 11, **dadurch gekennzeichnet, dass** der Spiegel (33) nach dem Zünden des entsprechenden pyrotechnischen Elements durch die empfangene thermische Energie verformt oder zerstört wird.

13. Modul nach Anspruch 12, **dadurch gekennzeichnet, dass** die thermische Energie durch die Verbrennung des entsprechenden pyrotechnischen Elements freigesetzt wird.

14. Modul nach einem der Ansprüche 12 und 13, **dadurch gekennzeichnet, dass** die thermische Energie zumindest teilweise von dem Lichtstrahl geliefert wird.

15. Modul nach einem der Ansprüche 10 und 11, **dadurch gekennzeichnet, dass** jeder Spiegel auf einem Träger (35, 47) angeordnet ist, der sich verformt (39), wenn die Temperatur einen vorbestimmten Wert erreicht.

16. Modul nach Anspruch 15, **dadurch gekennzeichnet, dass** der Spiegelträger ein Element (48) umfasst, das aus einer Legierung mit Formgedächtnis besteht.

17. Modul nach einem der Ansprüche 10 bis 16, **dadurch gekennzeichnet, dass** die Energiequelle (32) ein Laser ist.

18. Modul nach einem der Ansprüche 10 bis 17, **dadurch gekennzeichnet, dass** die Spiegel in Form dünner reflektierender Schichten (34) ausgeführt sind.

19. Modul nach einem der Ansprüche 1 bis 18, **dadurch gekennzeichnet, dass** es in einer Karte enthalten ist.
